# EUROPEAN PATENT SPECIFICATION

(11) **EP 2 015 982 B1**
(45) Date of publication and mention of the grant of the patent: **25.05.2011**
(21) Application number: 07729019.5
(22) Date of filing: 11.05.2007
(51) Int. Cl.: B62J 9/00, E05C 3/04

(54) **LOCK DEVICE FOR MOTORCYCLE CASES**
VERRIEGELUNGSVORRICHTUNG FÜR MOTORRADKOFFER
DISPOSITIF DE SERRURE POUR COFFRES DE MOTOCYCLETTE

(30) Priority: 11.05.2006 ES 200601205
(43) Date of publication of application: 21.01.2009
(73) Proprietor: NAD, S.L., 08100 Mollet del Vallès (ES)
(72) Inventor: AYALA GONZALEZ, Pedro, E-08100 Mollet Del Valles (ES); PLANAS JORDA, Joan, E-08100 Mollet Del Valles (ES)
(74) Representative: Ponti Sales, Adelaida
(86) International application number: PCT/EP2007/054567
(87) International publication number: WO 2007/131954

(56) References cited:
- EP-A- 1 338 498
- EP-A1- 0 709 282
- EP-A1- 1 063 157
- WO-A-01/12496
- DE-A1- 4 230 972

## Description

The present invention refers to a lock device for motorcycle cases as defined in the preamble of claim 1. Such a lock device is disclosed in EP-A-0 709 282.

### BACKGROUND OF THE INVENTION

There are known lock devices for motorcycle cases which permit to control the opening and closing of the lid of the case and the fixation or releasing of the case from the motorcycle.

These devices consist normally in a lock associated to closing means of the lid of the case and fixation means of the case to the motorcycle.

The lock can be set so that, in different positions, permits to open or lock the lid to the base of the case and the fixation or releasing of the case from the frame of the motorcycle.

In some models, the closing means of the lid of the case consist in a plate or piece provided with a hook engageable to a rim of the lid and hinged direct or indirectly to the base of the case or to an extensible handle to transport the case. The rotation of said piece permits the engagement or releasing of the hook from the lid.

Regarding the fixation means of the case to the motorcycle, they consist in a knob that when it is operated promotes a pin of the case to move, engageable to a plataform fixed to the frame of the motorcycle. The pin remains released from the platform and the case can be removed from the motorcycle.

The operation of the described devices comprises usually a first position of the lock, in which the closing means of the lid of the case and the fixation means of the case to the motorcycle are locked, and a second position of the lock in which the closing means of the lid of the case and the fixation means of the case to the motorcycle are released, so that they can be operated to open the lid of the case or to remove the case from the motorcycle.

Therefore, in the described devices, if the user operates the lock to open the lid of the case, he also releases the knob permitting to release the case from the motorcycle. This presents the drawback that it is not possible to fix the case to the motorcycle securely with the lid opened, because it is easy to access the knob and to remove the case.

Furthermore, it is known that in the described devices the user usually forgets to leave the lock of the case at its closing position of the lid and fixation of the case to the motorcycle, so that exists a possibility to start the motorcycle with the fixation means of the case to the motorcycle not locked, with the corresponding risk.

Finally, the operation of the described devices can be uncomfortable, because the user must operate the lock and also move with his hand other elements, such as e.g. the closing means of the lid, to open the lid of the case.

Devices of the disclosed kind can be found in the Spanish Utility Model U 1 029 302 and in the European Patent Application EP-A-0 370 368.

### DESCRIPTION OF THE INVENTION

The objective of the present invention is to solve the drawbacks present in the known devices of the prior art, providing a lock device for cases for motorcycles including a base and a lid hinged to said base, said device comprising a foldable handle hinged to said base and linked to closing means of the lid, a piece to operate fixation means of the case to a motorcycle, and a lock placed in said piece including a first latch linked to a fixation element of said handle in a folded position and a second latch engageable to a wall fixed to the base of the case to fix said piece, characterized in that said lock comprises:
a first position, in which the first latch is placed in a position corresponding to the closing position of the fixation element of the handle and in which the second latch is coupled to the wall fixing the piece;
a second position, in which the lock is rotated with respect to said first position of the lock and can move longitudinally, so that the longitudinal movement of the lock moves the first latch from a first position corresponding with a closing position of the fixation element of the handle to a second position corresponding to an opening position that allows the movement of the fixation element of the handle, and in which the second latch is engaged to the wall fixing the piece; and
a third position, in which the lock is rotated with respect to said first position and said second position of the lock, so that the rotation of the lock rotates the first latch a position corresponding to an opening position that allows the movement of the fixation element of the handle, and in which the second latch of the lock is released from the wall, so that it is possible to move the piece to remove the case from the motorcycle.

Thanks to these features, it is provided a lock device which permits to control by only one lock the opening of the lid of the case and the fixation means of the case to the motorcycle independently by a compact mechanism, which occupies little space.

The operation of the device is very simple, because it must only place the lock in one of the three positions to operate the different opening and closing mechanisms, and it permits a secure fixation of the case and of the lid of the case.

Preferably, the lock comprises a cylinder for a key linked to said first and second latches.

Advantageously, said first latch comprises a cam at the perimeter of the lock comprising a part in contact with the fixation element of the handle in said first, second or third position of the lock.

Also advantageously, said second latch comprises at least one protrusion at an end of the lock passing through at least one hole in said wall, said at least one protrusion is retained at the internal face of the wall in said first position or in said second position of the lock, and said at least one protrusion is placed corresponding with said at least one hole at said third position of the lock, so that said at least one protrusion can pass through said at least one hole.

According to one embodiment of the invention, the device comprises an external jacket linked to the cylinder and it includes the first latch and the second latch.

The first latch permits or prevents to operate said means to release the lid of the case, and the second latch permits or prevents to operate said means to remove the case of the motorcycle.

Preferably, the fixation element of the handle in the folded position comprises a hook hinged to the base of the case engageable to an end of the handle.

Advantageously, the device comprises elastic means to return the lock to a rest position after its longitudinal movement at the second or third position of the lock.

Also advantageously, the device comprises retaining means of the key in the lock in said third position of the lock.

The user cannot remove the key without locking the operation of the fixation means of the case to the motorcycle. This makes more difficult the user to leave the lock in the opening position of the fixation means of the case to the motorcycle, because the user could not remove the key. Therefore, it is prevented the theft of the case if the user forgets to operated the lock to lock the operation of the fixation means of the case to the motorcycle, or that the fixation means of the case to the motorcycle were not locked before the motorcycle moves.

According to an embodiment of the present invention, the device comprises operation means of said closing means of the lid between a first locking position of the lid and a second opening position of the lid.

Preferably, said operating means of the closing means of the lid comprises a lever hinged to the base of the case.

Advantageously, the handle comprises a folded position preventing the access to said operating means of the closing means of the lid, and an extended position in which there is free access to the operating means of the closing means of the lid.

Said foldable handle permits to transport the case manually, and closes or lets free the access opening to the lever which permits to open the lid of the case, so that the lid can only be opened when the handle is extended.

Preferably, the device comprises elastic means to extend automatically the handle.

According to an embodiment of the invention, said elastic means to extend automatically the handle comprises at least a torsion spring at the hinge axis of the handle to the base of the case.

Advantageously, the device comprises stopping means for the movement of the handle.

Preferably, said stopping means comprises a viscous shock absorber linked to the hinge axis of the handle.

Thanks to these features, the handle of the device extends automatically when it is released from its folded position, not being necessary to the extended manually.

Advantageously, the piece comprises a knob hinged to the base of the case and linked to said fixation means of the case of a motorcycle, said knob being movable between a first closing position of the fixation means of the case to the motorcycle and a second opening position of the fixation means of the case to the motorcycle.

Preferably, the fixation means of the case to the motorcycle comprises at least a pin engageable to at least a corresponding rim provided in a platform joined to the frame of the motorcycle.

According to an embodiment of the present invention, the device comprises elastic means to keep the pin in a closing position.

Said knob permits to remove the case from the motorcycle operating it.

Preferably, the pin comprises a body of plastic material and an internal reinforcement of metallic material.

This arrangement provides a pin of great mechanical strength and presenting a lower friction against the contact surfaces in contact with it.

The present invention also refers to a case for motorcycles and to a module engageable to motorcycle case, comprising a lock device according to anyone of claims 1 to 19.

The lock device of the present invention could be incorporated directly to the base of a case or be part of an engageable module to motorcycle cases, permitting the use of the device in cases of different format.

### BRIEF DESCRIPTION OF THE DRAWINGS

To facilitate the description of that disclosed previously some drawings are attached, in which, diagrammatically and only as a non-limitative example, a practical case of embodiment of the invention is shown, in which:
Figs. 1 and 2 are two perspective views of a case for motorcycles closed and opened, respectively, including a lock device according to the invention;
Fig. 3 is a diagrammatical sectional view of the opening device with the lock in a first closing position, with the lid of the case closed and locked and the case fixed to the platform of a motorcycle;
Figs. 4 and 5 are two diagrammatical sectional views of the opening device with the lock in a second position, in which the lid of the case can be released, and in which the case remains fixed to the platform of a motorcycle;
Figs. 6 and 7 are two diagrammatical sectional views of the opening device with the lock in a third position, in which both the lid and the handle of the case can be released, and in which the case can also be released from the platform of a motorcycle;
Fig. 8 is a perspective view of a part of the lock of the device of the invention in which the latches of the lock are shown;
Fig. 9 is a view in detail showing the engagement between the second latch of the lock and a wall fixed to the base of the case; and
Figs. 10 and 11 are two frontal and rear perspective views, respectively, of a module engageable to motorcycle cases comprising an opening and closing device according to the present invention.

### DESCRIPTION OF A PREFERRED EMBODIMENT

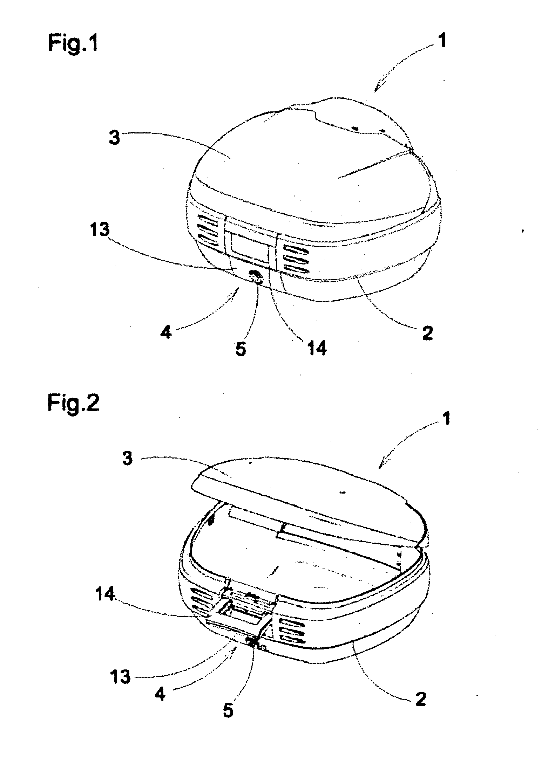

In Figs. 1 and 2 is shown a motorcycle case 1 comprising a base 2 or tank and a lid 3 hinged to said base 2 at its rear part. The case 1 is adapted to be fixed by its lower part of its base 2 to the frame of a motorcycle (no shown).

The case 1 includes a lock device 4 according to the present invention at the frontal part of the base 2.

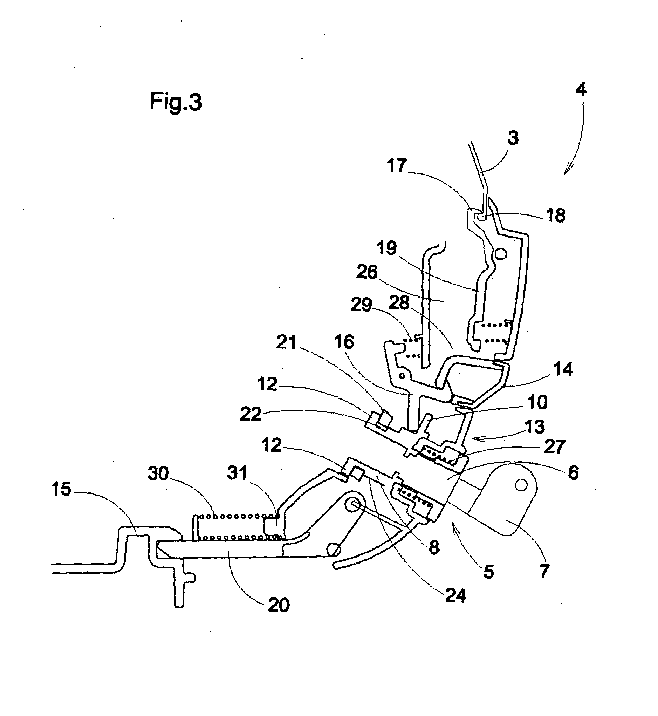

With reference also to Figs. 3 to 9, the lock device 4 of the invention comprises a lock 5 including a cylinder 6 for a key 7 and an external jacket 8 associated to said cylinder 6.

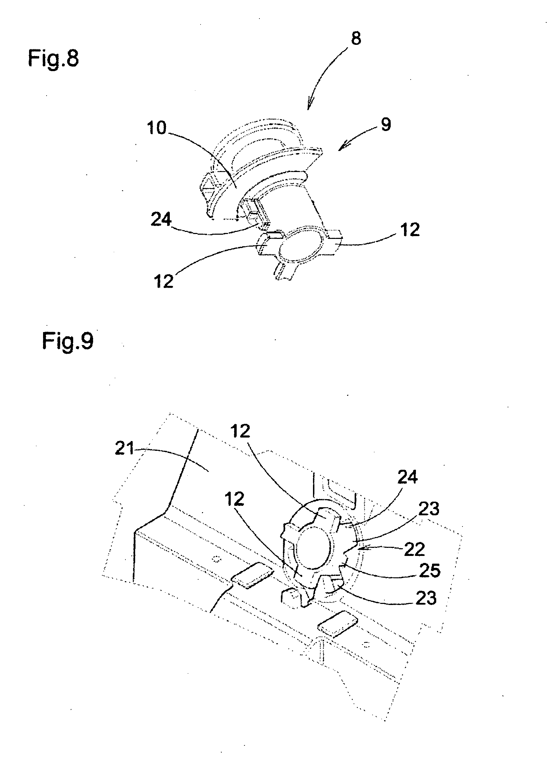

As it is shown in Fig. 8, the jacket 8 consists in a substantially cylindrical body longitudinal to the cylinder 6 placed around it. The jacket 8 comprises a first latch 9 consisting in a cam of helical wing shape, comprising a first length 10 and a second stretch 11 mutually offset in a longitudinal direction with respect to the axis of the cylinder 6 and connected by a central ramp-like length.

The jacket 8 also comprises a second latch 12 consisting in some protrusions placed at one of the ends of the jacket 8.

The lock 5 is placed at a piece or knob 13 hinged to the base 2 of the case 1 to operate fixation means of the case 1 to the frame of a motorcycle.

The lock device 4 also comprises a foldable handle 14 placed on the knob 13 and hinged to the base 2 of the case 1. The handle 14 is movable between a folded position and an extended position.

The features and operation of the lock device 4 of the present invention with be described with detail hereinafter.

In Fig. 3 the lock device 4 is in a closing position, in which the lid 3 is locked to the base 2 of the case 1 and the case 1 is fixed to a platform 15 fixed to the frame of a motorcycle.

More specifically, the handle 14 is folded and retained by a latch or hook 16 hinged to the base 2 of the case 1 and engaged to a rim placed at the free end of the handle 14.

The lid 3 is locked and fixed to the base 2 of the case by a hook 17 engaged to a complementary rim 18 in the lid 3 of the case 1.

The hook 17 is placed at the upper end of a hinged lever 19, whose operation permits to release the hook 17 and the rim 18, as will be described hereinabove.

The knob 13 is placed in a rest position and it is linked to a pin 20 engaged to a rim of a platform 15 in said rest position.

The lock 5 is placed in a first position, in which the part 10 of said first latch 9 of the lock 5 contacts the hook 16. The part 10 is designed so that when it contacts the hook 16 in said first position of the lock 5, the hook in the closing position, thanks to a spring 29, retaining the handle 14 in the folded position.

When the handle 14 is folded and retained, it occupies an access aperture 28 to a housing 26 inside which is placed the operation lever 19 of the hook 17. Therefore, the lever 19 remains protected from outside, inside said housing 26, preventing the lid 3 of the case 1 to be opened.

The second latch 12 of the lock 5 is placed near the internal face of a wall 21 fixed to the base 2 of the case (see Fig. 9). As it can be seen, the wall 21 comprises a hole 22, through with the free end of the jacket 8 and the latch 12 pass. The hole 22 includes external notches 23 permitting the protrusions 12 to pass through them. The protrusions 12 pass through the notches 23 if its position corresponds to them. In the first position of the lock 5, the protrusions of the latch 12 are not placed corresponding to said notches 23, so that they are retained against the internal face of the wall 21.

The jacket 8 also comprises protrusions 24 designed to rest against the external face of the wall 21. As the rims 12, the protrusions 24 pass through notches 25 if their position corresponds to them. In the first position of the lock 5, the protrusions 24 are not placed corresponding to the notches 25, so that they are locked against the external face of the wall 21.

Therefore, in the described position the free end of the jacket 8 cannot be removed from the hole 22, because it is locked by the protrusions 12, and it cannot be moved in the opposite direction because the protrusion 24 rests against the internal face of the wall 21. Therefore, the lock 8 is retained to the wall 21 and the knob 13 cannot be operated and remains locked and in the rest position.

Therefore, as it has been described, in the first position of the lock 5 the handle 14 is folded and locked, preventing to access the operation lever 19 of the hook 17 and the opening of the lid 3 of the case 1, and the knob 13 is retained to the wall 21, so that it cannot be operated to release the case 1 from the platform 15 of the motorcycle.

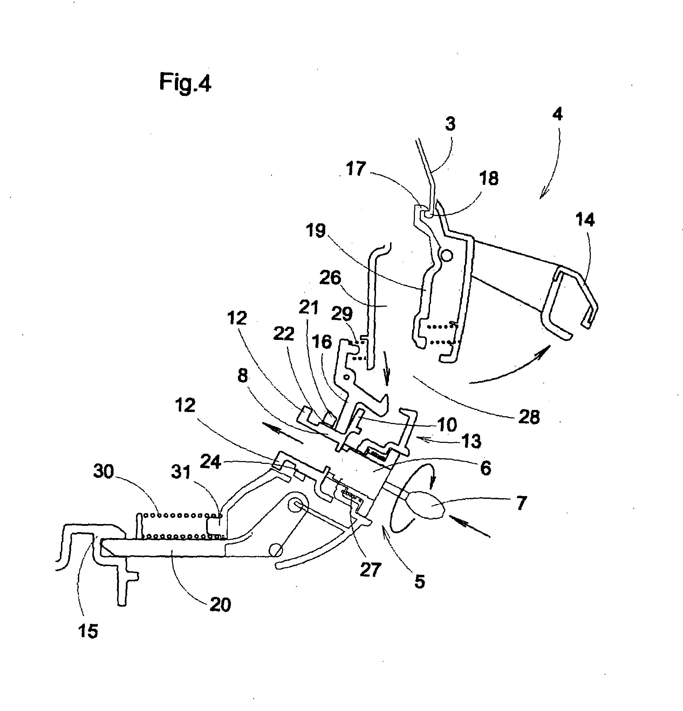

In Fig. 4 the lock device 4 is in an opening position of the lid 3 of the case 1.

In this position, the lock 5 is placed in a second position, rotated 90° with respect to the first position. The protrusions 12 of the second latch remain in a position not corresponding to the respective notches 23 of the hole 22, so that the knob 13 cannot be operated. The protrusions 24 of the lock 5 are placed corresponding to the respective notches 25 of the hole 22.

Therefore, the lock 5 can be moved longitudinally with respect to its rotation axis to the wall 21, pressing on it and passing the protrusions 24 through the notches 25, as it is disclosed in Fig. 4. A helical spring 27 is provided between an end of the lock 5 and the knob 13, and the lock 5 is returned to its rest position when the pressure is released.

The first latch 9 is also rotated 90° with respect to said first position of the lock 5, and the part 10 of the latch 9 contacts the hook 16. Therefore, when the lock 5 is in its rest position and it has not been pressed, the hook 16 is in the same closing position than that shown in Fig. 3, and the handle 14 is locked in its folded position.

When the lock 5 is pressed, the part 10 of the latch 9 also moves following the same path than the lock 5, and it moves the hook 16 up to an opening position. Therefore, the handle 14 is released and it can be folded.

Preferably, the handle 14 will include a device to permit the automatic extension of it when the hook 16 is operated to release it, e.g. a torsion spring (not shown) associated to the handle 14 and to the base 2 of the case 1 and placed in the hinge axis of the handle 14. It could also include stopping means preventing a sudden extension of the handle 14. Said stopping means could consist in a viscous shock absorber of a known kind linked to the handle 14 (not shown).

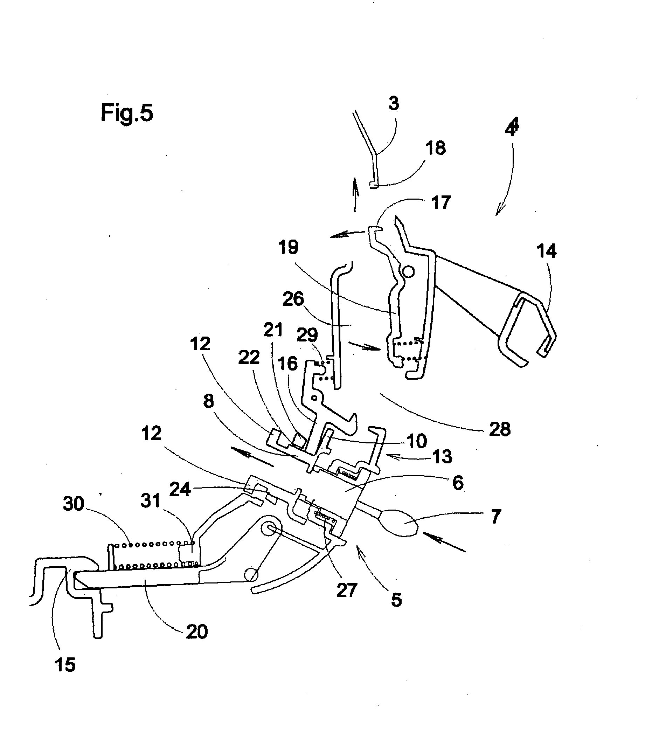

When the handle 14 is extended, it is removed from the access hole 28 to the housing 26 inside which it placed the lever 19. Therefore, the user can access said lever 19, and can operate it to release the lid 3 (see Fig. 5).

In this second position, when the lock 5 is in its rest position and it is not pressed, the handle 14 can be folded again and is locked in its folded position until the lock 5 is pressed again.

As stated previously, the protrusions 12 of the lock 5 remain in a position not corresponding to the respective notches 23 of the hole 22, so that the knob 13 remains unmovable and it cannot be operated to remove the case 1 from the platform 15 of the motorcycle.

Therefore, as described before, in said second position of the lock. 5 the handle 14 can be extended pressing the lock 5, so that the user can access the knob 19 to open the lid 3 of the case 1, and the knob 13 is retained to the wall 21, so that it cannot be operated to release the case 1 from the platform 15 of the motorcycle.

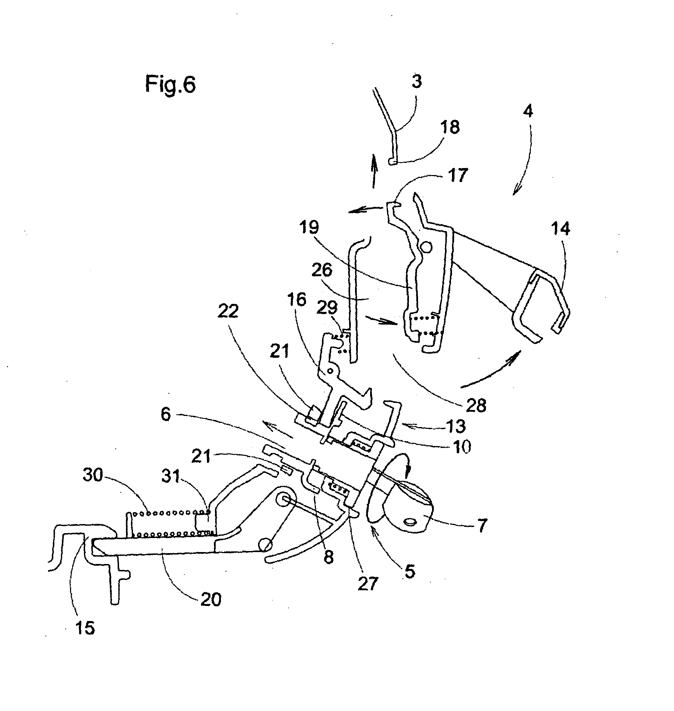

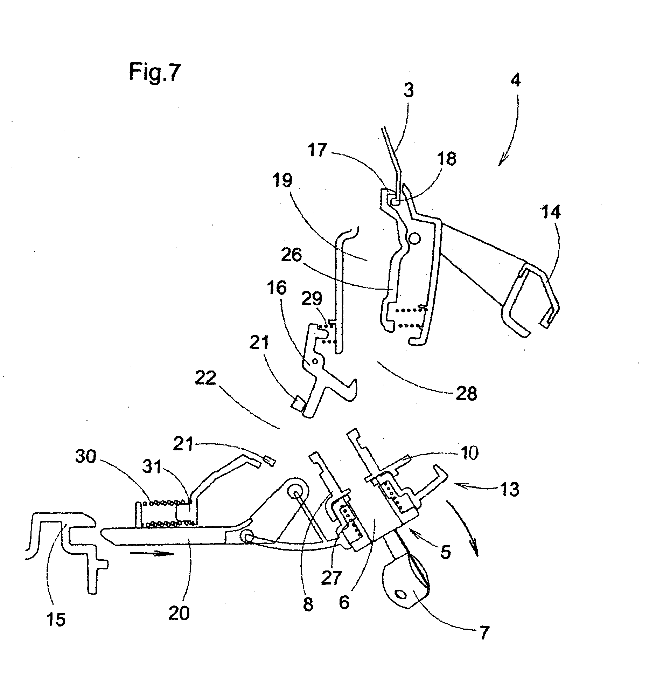

In Figs. 6 and 7, the lock device 4 is in an opening position of the lid 3 of the case 1, and in a removing position of the case 1 from the platform 15 of the motorcycle.

In this position, the lock 5 is placed in a third position, rotated 135° with respect to said first position.

As is disclosed in Fig. 6, when the lock 3 rotates to the third position, the latch 9 also rotates 135 degrees with respect to said first position of the lock 5, so that now the part 10 of the latch 9 contacts the hook 16.

Also, in that third position, when the lock 5 is moved longitudinally the part 10 of the latch 9 moves the hook 16 and the handle 14 can be extended. With the handle 14 released, it's possible to access the knob 13 to release the bag.

Regarding the second latch 12, in this third position of the lock 5, the protrusions 12 are in a position corresponding to the respective notches 23 of the hole 22.

Therefore, the lock 5 can be removed from the hole 22 departing from the wall 21 passing the holes 12 though the notches 24 of the hole 22. This permits to operate the knob 13 pulling it and rotating it (Fig. 7) about a hinge axis to the base 2 of the case 1.

The knob 13 is linked to a pin 20 engageable to a complementary rim of a platform 15 fixed to the motorcycle. As it can be seen, the device 4 comprises a spring 30 placed between the pin 20 and a rest position 31 fixed to the base 2 of the case 1. Said spring 30 retains the pin 20 in an extended position engaged with the rim of the platform 15 and the knob 13 in the closing position.

When the knob 13 is operated pulling it, the pin 20 is moved by the knob 13 and compresses the spring 20 to an opening position in which it is released from the rim of the platform 15, so that the case 1 can be separated from the motorcycle.

The pin 20 will be made preferably from plastic material, and will comprise metallic reinforcements inside it. Therefore, the pin 20 presents less friction and an enhanced mechanical strength.

The cylinder 6 of the lock 5 is designed so that in said third position of the lock 5 the key 7 cannot be removed from it. This is a security measure by which the user must rotate the lock 5 until the first or second position to remove the key 7, so that the user cannot leave the case 1 fixed to the platform 15 with the knob 13 not locked.

As it has been described, in the third position of the lock 5 the handle 14 is extended when the lock 5 is moved longitudinally, so that the user can access the lever 19 to open the lid 3 of the case 1. The handle 14 can be retained again in its folded position if the user moves the handle 14 to this position. Furthermore, the knob 13 is released and it can be operated to remove the case 1 from the platform 15 of the motorcycle. The key 7 is retained to the cylinder 6, and it cannot be removed.

As it can be seen, the lock device 4 of the invention permits to do all the opening and closing functions by the operation of only one lock 5. Furthermore, thanks to said three positions of the lock, the opening of the lid of the case or the fixation and removal of the case from the platform of the motorcycle can be controlled independently, and the case 1 cannot be fixed inappropriately to the motorcycle or cannot be stolen because of an oversight of the user.

Furthermore, the operation of the lock device 4 of the present invention is very simple and all the opening and closing operations can be done quickly and with only one hand.

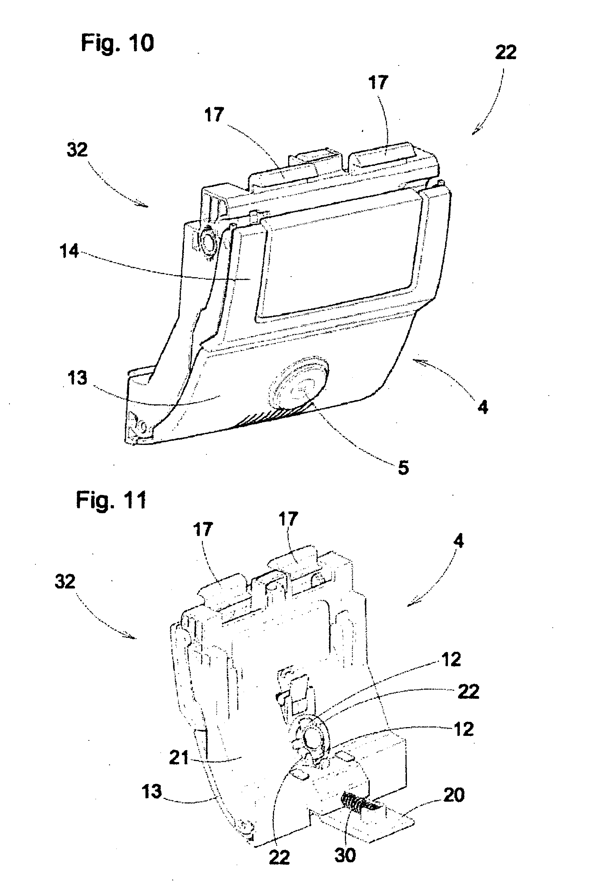

The lock device 4 of the present invention can be incorporated directly at the base 2 of a motorcycle case, even though it could also be part of an independent module 32 (Figs. 10 and 11) which is fixed to the base 2 of a case for motorcycles by screws or other known means. Said module 32 can be fixed to cases of different kind or size, so that it is possible to reduce fabrication costs.

## Claims

1. Lock device (4) for cases (1) for motorcycles including a base (2) and a lid (3) hinged to said base (2), said device (4) comprising a foldable handle (14) hinged to said base (2) and linked to closing means (17) of the lid (3), a piece (13) to operate fixation means (20) of the case (1) to a motorcycle, and a lock (5) placed in said piece (13) including a first latch (9) linked to a fixation element (16) of said handle (14) in a folded position and a second latch (12) engageable to a wall (21) fixed to the base (2) of the case (1) to fix said piece (13), said lock comprising
a first position, in which the first latch (9) is placed in a position corresponding to the closing position of the fixation element (16) of the handle (14) and in which the second latch (12) is coupled to the wall (21) fixing the piece (13);
and **characterized in that** said lock (5) further comprises:
a second position, in which the lock (5) is rotated with respect to said first position of the lock (5) and can move longitudinally, so that a longitudinal movement of the lock (5) moves the first latch (9) from a first position corresponding with a closing position of the fixation element (16) of the handle (14) to a second position that allows the movement of the fixation element (16) of the handle (14), and in which the second latch (12) is engaged to the wall (21) fixing the piece (13); and
a third position, in which the lock (5) is rotated with respect to said first position and said second position of the lock (5), so that the rotation of the lock (5) rotates the first latch (9) a position corresponding to an opening position that allows the movement of the fixation element (16) of the handle (14), and in which the second latch (12) of the lock is released from the wall (21), so that it is possible to move the piece (13) to remove the case (1) from the motorcycle.

2. Device (4) according to claim 1, **characterized in that** the lock (5) comprises a cylinder (6) for a key (7) linked to said first (9) and second (12) latches.

3. Device (4) according to claims 1 or 2, **characterized in that** said first latch (9) comprises a cam at the perimeter of the lock comprising a part (10) in contact with the fixation element (16) of the handle (14) in said first, second or third.

4. Device (4) according to anyone of the previous claims, **characterized in that** said second latch comprises at least one protrusion (12) at an end of the lock (5) passing through at least one hole (23) in said wall (21), said at least one protrusion (12) is retained at the internal face of the wall (21) in said first position or in said second position of the lock (5), and said at least one protrusion (12) is placed corresponding with said at least one hole (23) at said third position of the lock (5), so that said at least one protrusion (12) can pass through said at least one hole (23).

5. Device (4) according to anyone of claims 2 to 4, **characterized in that** it comprises an external jacket (8) linked to the cylinder (6) and it includes the first latch (9) and the second latch (12).

6. Device (4) according to anyone of the previous claims, **characterized in that** the fixation element of the handle (13) in the folded position comprises a hook (16) hinged to the base (2) of the case (1) engageable to an end of the handle (14).

7. Device (4) according to anyone of the previous claims, **characterized in that** it comprises elastic means (27) to return the lock (5) to a rest position after its longitudinal movement at the second or third position of the lock (5).

8. Device (4) according to anyone of claims 2 to 7, **characterized in that** it comprises retaining means of the key (7) in the lock (5) in said third position of the lock (5).

9. Device (4) according to anyone of the previous claims, **characterized in that** it comprises operation means (19) of said closing means (17) of the lid (3) between a first locking position of the lid (3) and a second opening position of the lid (3).

10. Device (4) according to claim 9, **characterized in that** said operating means of the closing means (17) of the lid (3) comprises a lever (19) hinged to the base (2) of the case (1).

11. Device (4) according to claims 9 or 10, **characterized in that** the handle (14) comprises a folded position preventing the access to said operating means (19) of the closing means (17) of the lid (3), and an extended position in which there is free access to the operating means (19) of the closing means (17) of the lid (3).

12. Device (4) according to anyone of the previous claims, **characterized in that** it comprises elastic means to extend automatically the handle (14).

13. Device (4) according to anyone of the previous claims, **characterized in that** said elastic means to extend automatically the handle (14) comprises at least a torsion spring at the hinge axis of the handle (14) to the base (2) of the case (1).

14. Device (4) according to claims 12 or 13, **characterized in that** it comprises stopping means for the movement of the handle (14).

15. Device (4) according to claim 14, **characterized in that** said stopping means comprises a viscous shock absorber linked to the hinge axis of the handle (14).

16. Device (4) according to anyone of the previous claims, **characterized in that** the piece comprises a knob (13) hinged to the base (2) of the case (1) and linked to said fixation means (20) of the case (1) of a motorcycle, said knob (13) being movable between a first closing position of the fixation means (20) of the case (1) to the motorcycle and a second opening position of the fixation means (20) of the case (1) to the motorcycle.

17. Device (4) according to anyone of the previous claims, **characterized in that** the fixation means of the case (1) to the motorcycle comprises at least a pin (20) engageable to at least a corresponding rim provided in a platform joined to the frame of the motorcycle.

18. Device (4) according to claim 17, **characterized in that** it comprises elastic means (30) to keep the pin (20) in a closing position.

19. Device (4) according to claims 17 or 18, **characterized in that** the pin (20) comprises a body of plastic material and an internal reinforcement of metallic material.

20. Case (1) for motorcycles, **characterized in that** it comprises a lock device (4) according to anyone of claims 1 to 19.

21. Module (32) engageable to motorcycle cases (1), **characterized in that** it comprises a lock device (4) according to anyone of claims 1 to 19.

## Patentansprüche

1. Verriegelungsvorrichtung (4) für Motorradkoffer (1) umfassend eine Basis (2) und einen Deckel (3), der an der Basis (2) angelenkt ist, wobei die Vorrichtung (4) einen faltbaren Handgriff (14) aufweist, der an der Basis (2) angelenkt ist und mit einer Schließeinrichtung (17) des Deckels (3) verbunden ist, ein Element (13) zur Bedienung einer Befestigungseinrichtung (20) des Koffers (1) an einem Motorrad, und ein Schloss (5), das in dem Element (13) platziert ist, einen ersten Riegel (9), der mit einem Befestigungselement (16) des Handgriffs (14) in einer gefalteten Position verbunden ist und einen zweiten Riegel (12) aufweist, der mit einer Wand (21) in Eingriff bringbar ist, die mit der Basis (2) des Koffers (1) verbunden ist, um das Element (13) zu fixieren, wobei das Schloss aufweist:
eine erste Position, in der der erste Riegel (9) sich in einer Position befindet, die der Schließposition des Befestigungselements (16) des Handgriffs (14) entspricht, und in der der zweite Riegel (12) mit der Wand (21) zur Befestigung des Elements (13) gekoppelt ist;
und **dadurch gekennzeichnet, dass** das Schloss (5) weiterhin aufweist:
eine zweite Position, in der das Schloss (5) bezüglich der ersten Position des Schlosses (5) gedreht ist und sich in Längsrichtung bewegen kann, so dass eine Längsbewegung des Schlosses (5) den ersten Riegel (9) von der ersten Position, die einer Schließposition des Befestigungselements (16) des Handgriffs (14) entspricht, in eine zweite Position bewegt, die die Bewegung des Befestigungselements (16) des Handgriffs (14) erlaubt, und in der der zweite Riegel (12) in Eingriff steht mit der Wand (21) zur Festlegung des Elements (13); und
eine dritte Position, in der das Schloss (5) bezüglich der ersten Position und der zweiten Position des Schlosses (5) gedreht ist, so dass die Drehung des Schlosses (5) den ersten Riegel (9) in eine Position dreht, die einer Öffnungsposition entspricht, was die Bewegung des Befestigungselements (16) des Handgriffs (14) erlaubt, und in der der zweite Riegel (12) des Schlosses von der Wand (21) gelöst ist, so dass es möglich ist, das Element (13) zu bewegen, um den Koffer (1) von dem Motorrad zu entfernen.

2. Vorrichtung (4) nach Anspruch 1, **dadurch gekennzeichnet, dass** das Schloss (5) einen Zylinder (6) für einen Schlüssel (7) aufweist, der mit dem ersten (9) und dem zweiten (12) Riegel verbunden ist.

3. Vorrichtung (4) nach Anspruch 1 oder 2, **dadurch gekennzeichnet, dass** der erste Riegel (9) einen Nocken am Umfang des Schlosses aufweist, der einen Abschnitt (10) in Kontakt mit dem Befestigungselement (16) des Handgriffs (14) in der ersten, zweiten oder dritten Position aufweist.

4. Vorrichtung (4) nach einem der vorhergehenden Ansprüche, **dadurch gekennzeichnet, dass** der zweite Riegel wenigstens einen Vorsprung (12) an einem Ende des Schlosses (5) aufweist, der durch wenigstens eine Öffnung (23) in der Wand (21) hindurchgeht, wobei dieser wenigstens eine Vorsprung (12) an der Innenseite der Wand (21) in der ersten Position oder in der zweiten Position des Schlosses (5) gehalten wird, und der wenigstens eine Vorsprung (12) entsprechend der wenigstens einen Öffnung (23) an der dritten Position des Schlosses (5) platziert ist, so dass der wenigstens eine Vorsprung (12) sich durch die wenigstens eine Öffnung (23) bewegen kann.

5. Vorrichtung (4) nach einem der Ansprüche 2 bis 4, **dadurch gekennzeichnet, dass** sie einen äußeren Mantel (8) aufweist, der mit dem Zylinder (6) verbunden ist und den ersten Riegel (9) und den zweiten Riegel (12) umfasst.

6. Vorrichtung (4) nach einem der vorhergehenden Ansprüche, **dadurch gekennzeichnet, dass** das Befestigungselement des Handgriffs (13) in der gefalteten Position einen Haken (16) aufweist, der an der Basis (2) des Koffers (1) angelenkt ist, wobei er in Eingriff mit einem Ende des Handgriffs (14) bringbar ist.

7. Vorrichtung (4) nach einem der vorhergehenden Ansprüche, **dadurch gekennzeichnet, dass** sie Federeinrichtungen (27) aufweist, um das Schloss (5) in eine Ruheposition zurück zu bringen, nach dessen Längsbewegung in der zweiten oder dritten Position des Schlosses (5).

8. Vorrichtung (4) nach einem der Ansprüche 2 bis 7, **dadurch gekennzeichnet, dass** sie Rückhalteeinrichtungen des Schlüssels (7) in dem Schloss (5) in der dritten Position des Schlosses (5) aufweist.

9. Vorrichtung (4) nach einem der vorhergehenden Ansprüche, **dadurch gekennzeichnet, dass** sie eine Betätigungseinrichtung (19) der Schließeinrichtung (17) des Deckels (3) zwischen einer ersten Schließposition des Deckels (3) und einer zweiten Öffnungsposition des Deckels (3) aufweist.

10. Vorrichtung (4) nach Anspruch 9, **dadurch gekennzeichnet, dass** die Betätigungseinrichtung der Schließeinrichtung (17) des Deckels (3) einen Hebel (19) aufweist, der an der Basis (2) des Koffers (1) angelenkt ist.

11. Vorrichtung (4) nach Anspruch 9 oder 10, **dadurch gekennzeichnet, dass** der Handgriff (14) eine gefaltete Position aufweist, die den Zugang zu der Betätigungseinrichtung (19) der Schließeinrichtung (17) des Deckels (3) verhindert, und eine ausgefahrene Position aufweist, in der ein freier Zugang zu der Betätigungseinrichtung (19) der Schließeinrichtung (17) des Deckels (3) herrscht.

12. Vorrichtung (4) nach einem der vorhergehenden Ansprüche, **dadurch gekennzeichnet, dass** sie eine elastische Einrichtung aufweist, um automatisch den Handgriff (14) zu dehnen.

13. Vorrichtung (4) nach einem der vorhergehenden Ansprüche, **dadurch gekennzeichnet, dass** die elastische Einrichtung, um automatisch den Handgriff (14) zu dehnen, wenigstens eine Torsionsfeder auf der Gelenkachse des Handgriffs (14) zu der Basis (2) des Koffers (1) aufweist.

14. Vorrichtung (4) nach Anspruch 12 oder 13, **dadurch gekennzeichnet, dass** sie eine Stoppeinrichtung gegen die Bewegung des Handgriffs (14) aufweist.

15. Vorrichtung (4) nach Anspruch 14, **dadurch gekennzeichnet, dass** die Stoppeinrichtung einen Flüssigstoßdämpfer aufweist, der mit der Gelenkachse des Handgriffs (14) verbunden ist.

16. Vorrichtung (4) nach einem der vorhergehenden Ansprüche, **dadurch gekennzeichnet, dass** das Element einen Knauf (13) aufweist, der an der Basis (2) des Koffers (1) angelenkt und mit der Befestigungseinrichtung (20) des Koffers (1) eines Motorrads verbunden ist, wobei der Knauf (13) bewegbar ist zwischen einer ersten Schließstellung der Befestigungseinrichtung (20) des Koffers (1) an dem Motorrad und einer zweiten Öffnungsstellung der Befestigungseinrichtung (20) des Koffers (1) an dem Motorrad.

17. Vorrichtung (4) nach einem der vorhergehenden Ansprüche, **dadurch gekennzeichnet, dass** die Befestigungseinrichtung des Koffers (1) an dem Motorrad wenigstens einen Zapfen (20) aufweist, der mit wenigstens einem entsprechenden Rand in Eingriff bringbar ist, vorgesehen in einer Plattform, die mit dem Rahmen des Motorrads verbunden ist.

18. Vorrichtung (4) nach Anspruch 17, **dadurch gekennzeichnet, dass** sie eine Federeinrichtung (30) aufweist, um den Zapfen (20) in einer Schließposition zu halten.

19. Vorrichtung (4) nach Anspruch 17 oder 18, **dadurch gekennzeichnet, dass** der Zapfen (20) einen Körper aus Kunststoffmaterial und eine innere Verstärkung aus metallischem Material aufweist.

20. Koffer (1) für Motorräder, **dadurch gekennzeichnet, dass** er eine Schließvorrichtung (4) nach einem der Ansprüche 1 bis 19 aufweist.

21. Modul (32) das mit Motorradkoffern (1) in Eingriff bringbar ist, **dadurch gekennzeichnet, dass** es eine Schließvorrichtung (4) nach einem der Ansprüche 1 bis 19 aufweist.

## Revendications

1. Dispositif de serrure (4) pour des coffres (1) de motocyclettes comprenant une base (2) et un couvercle (3) articulé par rapport à ladite base (2), ledit dispositif (4) comprenant une poignée (14) repliable articulée par rapport à ladite base (2) et reliée à un moyen de fermeture (17) du couvercle (3), une pièce (13) pour mettre en oeuvre un moyen de fixation (20) du coffre (1) sur une motocyclette, et une serrure (5) placée dans ladite pièce (13) comprenant un premier verrou (9) relié à un élément de fixation (16) de ladite poignée (14) dans une position repliée et un second verrou (12) pouvant être mis en prise par rapport à une paroi (21) fixée à la base (2) du coffre (1) pour fixer ladite pièce (13), ladite serrure comprenant
une première position, dans laquelle le premier verrou (9) est placé dans une position correspondant à la position de fermeture de l'élément de fixation (16) de la poignée (14) et dans laquelle le second verrou (12) est couplé à la paroi (21) fixant la pièce (13) ;
et **caractérisé en ce que** ladite serrure (5) comprend en outre :
une deuxième position, dans laquelle la serrure (5) est pivotée par rapport à ladite première position de la serrure (5) et peut se déplacer de manière longitudinale, de sorte qu'un mouvement longitudinal de la serrure (5) déplace le premier verrou (9) à partir d'une première position correspondant à une position de fermeture de l'élément de fixation (16) de la poignée (14) par rapport à une deuxième position qui permet le mouvement de l'élément de fixation (16) de la poignée (14), et dans laquelle le second verrou (12) est mis en prise par rapport à la paroi (21) fixant la pièce (13) ; et
une troisième position, dans laquelle la serrure (5) est pivotée par rapport à ladite première position et à ladite deuxième position de la serrure (5), de sorte que la rotation de la serrure (5) fait pivoter le premier verrou (9) dans une position qui correspond à une position d'ouverture qui permet le mouvement de l'élément de fixation (16) de la poignée (14), et dans laquelle le second verrou (12) de la serrure est libéré de la paroi (21), de sorte qu'il est possible de déplacer la pièce (13) pour retirer le coffre (1) de la motocyclette.

2. Dispositif (4) selon la revendication 1, **caractérisé en ce que** la serrure (5) comprend un cylindre (6) pour une clé (7), relié auxdits premier (9) et second (12) verrous.

3. Dispositif (4) selon la revendication 1 ou 2, **caractérisé en ce que** ledit premier verrou (9) comprend une came au niveau du périmètre de la serrure comprenant une partie (10) en contact avec l'élément de fixation (16) de la poignée (14) dans lesdites première, deuxième ou troisième positions.

4. Dispositif (4) selon l'une quelconque des revendications précédentes, **caractérisé en ce que** ledit second verrou comprend au moins une protubérance (12) au niveau d'une extrémité de la serrure (5) passant à travers au moins un trou (23) dans ladite paroi (21), ladite au moins une protubérance (12) étant retenue au niveau de la face interne de la paroi (21) dans ladite première position ou dans ladite deuxième position de la serrure (5), et ladite au moins une protubérance (12) étant placée en correspondance avec ledit au moins un trou (23) au niveau de ladite troisième position de la serrure (5), de sorte que ladite au moins une protubérance (12) peut passer à travers ledit au moins un trou (23).

5. Dispositif (4) selon l'une quelconque des revendications 2 à 4, **caractérisé en ce qu'**il comprend une enveloppe externe (8) reliée au cylindre (6), et comprend le premier verrou (9) et le second verrou (12).

6. Dispositif (4) selon l'une quelconque des revendications précédentes, **caractérisé en ce que** l'élément de fixation de la poignée (13) dans la position repliée comprend un crochet (16) articulé par rapport à la base (2) du coffre (1) et pouvant être mis en prise avec une extrémité de la poignée (14).

7. Dispositif (4) selon l'une quelconque des revendications précédentes, **caractérisé en ce qu'**il comprend un moyen élastique (27) pour faire revenir la serrure (5) à une position de repos après son mouvement longitudinal au niveau de la deuxième ou troisième position de la serrure (5).

8. Dispositif (4) selon l'une quelconque des revendications 2 à 7, **caractérisé en ce qu'**il comprend un moyen de retenue de la clé (7) dans la serrure (5) dans ladite troisième position de la serrure (5).

9. Dispositif (4) selon l'une quelconque des revendications précédentes, **caractérisé en ce qu'**il comprend un moyen de mise en oeuvre (19) dudit moyen de fermeture (17) du couvercle (3) entre une première position de verrouillage du couvercle (3) et une deuxième position d'ouverture du couvercle (3).

10. Dispositif (4) selon la revendication 9, **caractérisé en ce que** ledit moyen de mise en oeuvre du moyen de fermeture (17) du couvercle (3) comprend un levier (19) articulé par rapport à la base (2) du coffre (1).

11. Dispositif (4) selon la revendication 9 ou 10, **caractérisé en ce que** la poignée (14) comprend une position repliée empêchant l'accès audit moyen de mise en oeuvre (19) du moyen de fermeture (17) du couvercle (3), et une position étendue dans laquelle il y a un accès libre au moyen de mise en oeuvre (19) du moyen de fermeture (17) du couvercle (3).

12. Dispositif (4) selon l'une quelconque des revendications précédentes, **caractérisé en ce qu'**il comprend un moyen élastique pour étendre automatiquement la poignée (14).

13. Dispositif (4) selon l'une quelconque des revendications précédentes, **caractérisé en ce que** ledit moyen élastique destiné à étendre automatiquement la poignée (14) comprend au moins un ressort de torsion au niveau de l'axe d'articulation de la poignée (14) par rapport à la base (2) du coffre (1).

14. Dispositif (4) selon la revendication 12 ou 13, **caractérisé en ce qu'**il comprend un moyen d'arrêt pour le mouvement de la poignée (14).

15. Dispositif (4) selon la revendication 14, **caractérisé en ce que** ledit moyen d'arrêt comprend un amortisseur hydraulique relié à l'axe d'articulation de la poignée (14).

16. Dispositif (4) selon l'une quelconque des revendications précédentes, **caractérisé en ce que** la pièce comprend un bouton (13) articulé par rapport à la base (2) du coffre (1) et relié audit moyen de fixation (20) du coffre (1) d'une motocyclette, ledit bouton (13) pouvant être déplacé entre une première position de fermeture du moyen de fixation (20) du coffre (1) sur la motocyclette et une seconde position d'ouverture du moyen de fixation (20) du coffre (1) sur la motocyclette.

17. Dispositif (4) selon l'une quelconque des revendications précédentes, **caractérisé en ce que** le moyen de fixation du coffre (1) par rapport à la motocyclette comprend au moins une broche (20) pouvant être mise en prise par rapport à au moins un rebord correspondant fourni au niveau d'une plate-forme reliée au châssis de la motocyclette.

18. Dispositif (4) selon la revendication 17, **caractérisé en ce qu'**il comprend un moyen élastique (30) destiné à garder la broche (20) dans une position de fermeture.

19. Dispositif (4) selon la revendication 17 ou 18, **caractérisé en ce que** la broche (20) comprend un corps de matériau plastique et un renforcement interne en matériau métallique.

20. Coffre (1) pour motocyclette, **caractérisé en ce qu'**il comprend un dispositif de serrure (4) selon l'une quelconque des revendications 1 à 19.

21. Module (32) pouvant être mis en prise par rapport à des coffres de motocyclette (1), **caractérisé en ce qu'**il comprend un dispositif de serrure (4) selon l'une quelconque des revendications 1 à 19.
